# EUROPÄISCHE PATENTANMELDUNG

(11) **EP 2 246 757 A1**
(43) Veröffentlichungstag der Anmeldung: **03.11.2010**
(21) Anmeldenummer: 09158903.6
(22) Anmeldetag: 28.04.2009
(51) Int. Cl.: G05B 19/05, H04L 29/12, G05B 19/418

(54) **Verfahren zur Adressierung von Variablen in einem verteilten Automatisierungssystem**

(71) Anmelder: SIEMENS AKTIENGESELLSCHAFT, 80333 München (DE)
(72) Erfinder: Leins, Ralf, 75228 Ispringen (DE); Mössner, Rudolf, 93133 Burglengenfeld (DE); Opaterny, Thilo, 90453 Nürnberg (DE); Thurner, Elmar, 90491 Nürnberg (DE)

(57) **Zusammenfassung**

Die Erfindung betrifft ein Adressierungsverfahren in einem verteilten Automatisierungssystems (A) mit zumindest einem ersten und zweiten programmgesteuerten Teilgerät (SPS, HMI). Erfindungsgemäß werden für eine Adressierung einer Variablen (ANNA) durch das zweite Teilgerät (HMI) als Adressdaten an das erste Teilgerät (SPS) zumindest ein der Variablen zugeordneter eindeutiger Kennwert (ID1) und ein Prüfwert (CRC) über die Adressdaten der Variablen übermittelt. Der Kennwert wurde bei einer Definition der Variablen vom ersten Teilgerät selbstständig so generiert, dass dieser im ersten Teilgerät zu keinem Zeitpunkt einer weiteren Variablen zugeordnet ist. Vorteilhaft bestimmt das erste Teilgerät (SPS) einen Prüfwert für die Adressdaten der Variablen selbst und vergleicht diesen mit dem vom zweiten Teilgerät (HMI) übermittelten Prüfwert. Ein Istwert der gewünschten Variablen wird vom ersten Teilgerät nur bei Übereinstimmung des selbst bestimmten mit dem übermittelten Prüfwert freigegeben.

## Beschreibung

Zur Projektierung und Führung eines technischen Prozesses wird vielfach ein verteiltes Automatisierungssystem eingesetzt. Dieses weisen zumindest zwei unter Umständen lokal getrennt angeordnete programmgesteuerte Teilgeräte auf. Diese greifen zwar im laufenden Betrieb, d.h. zur Runtime, auf denselben technischen Prozess zu, können aber in anderen Zeitpunkten, z.B. bei der Projektierung bzw. bei Servicearbeiten, von unterschiedlichen Personen in verschiedener Weise beeinflusst werden. So können z.B. einerseits die zur Steuerung und Regelung eines technischen Prozesses notwendigen Aktionen und andererseits die zur Bedienung und Beobachtung des technischen Prozesses notwendigen Aktionen von unterschiedlichen, programmgesteuerten Teilgeräten ausgeführt werden. In diesem Falle greifen also ein programmgesteuertes Steuerungssystem, etwa eine speicherprogrammierbare Steuerung SPS, und ein programmgesteuertes Bedien- und Beobachtungssystem, etwa ein Human Machine Interface HMI, auf denselben Projektierungsdatensatz zu. In einem anderen Fall ist es z.B. möglich, dass quasi zeitgleich an räumlich entfernten Projektierungssystemen auf ein und denselben Projektierungsdatensatz zugegriffen wird und daran programmtechnische Veränderungen vorgenommen werden.

In beiden Fällen müssen Änderungen der Projektierungsdaten eines programmgesteuerten Teilgeräts in den anderen beteiligten Teilgeräten nachgeladen werden. Hiermit wird zumindest nachträglich eine Synchronität zwischen z.B. der Steuerung und einem Bedien- und Beobachtungssystem des technischen Prozesses oder z.B. zwischen zwei Projektierungssystemen sichergestellt. Besonderes Augenmerk muss dabei auf Variablen gelegt werden. Hierunter wird in der Programmierung ein Speicherplatz für eine Rechnungsgröße verstanden, die während eines Rechenprozesses unterschiedliche Werte annehmen kann. Für die Adressierung einer Variablen werden bei der Erstellung bzw. Änderung eines Projektierungsdatensatzes insbesondere die physikalische Adresse des Speicherplatzes der Variablen in einem Rechner und ein Variablenname, unter dem der Speicherplatz bevorzugt logisch angesprochen werden kann, eingesetzt. Bei Änderungen eines Projektierungsdatensatzes können besonders bezüglich der Adressierung von Variablen Inkonsistenzen auftreten.

In den programmgesteuerten Teilgeräten eines verteilten Automatisierungssystems, z.B. in einer speicherprogrammierbaren Steuerung und einem datentechnisch daran angeschlossenen Bedien- und Beobachtungssystemen, werden die Adressen von Variablen, welche Eingänge, Ausgänge und Merker für Prozesssignale repräsentieren, direkt vergeben. Weiterhin kann es bei Automatisierungssystemen vorkommen, dass Programmbefehle zu so genannten Codebausteine zusammengefasst sind und in einer solchen Kette von Anweisungen eine oder mehrere Variablen enthalten sind. Darüber hinaus ist es vorteilhaft, mehrere logisch zusammen gehörige Variablen zu einem Datenbaustein zusammen zu fassen. Bausteine dieser Art ermöglichen es, Teile eines Programms und von deren Datenhaltung von einem Projektierungssystem auf einfache Weise auf ein Automatisierungssystem nachzuladen.

Die Adressen von Variablen im Inneren von Datenbausteinen, welche in der Regel mehrere Prozesseingangssignale zu einem neuen Prozessausgangssignal verknüpfen, werden indirekt über die Reihenfolge der Deklaration im Inneren des Datenbausteins vergeben. Bei der Adressierung einer Variablen im Inneren eines Datenbausteins muss also zusätzlich ein so genannter OFFSET berücksichtigt werden. Dabei handelt es sich um den Adressabstand der Variablen zum Anfang des Datenbausteins, d.h. der Einsprungadresse. Die Adressdaten einer Variablen enthalten in einem solchen Fall den VARIABLENNAMEN, die Anfangsadresse des DATENBAUSTEINS und den adressenmäßigen OFFSET der Variablen relativ zur Anfangsadresse am Anfang des Datenbausteins. Bei anderen Anwendungen kann sich ein solcher Offset auch relativ zu einer anderen Adresse ergeben, z.B. zum Anfang eines Speichers oder einer bestimmten Speicheradresse eines Ein- oder Ausgabemoduls.

Wenn also in einem verteilten Automatisierungssystem z.B. ein Bedien- und Beobachtungssystem auf die in einer dazugehörigen Steuerung vorhandenen Variablen zugreifen will, so werden diese Variablen über deren Adressdaten identifiziert. Damit bei derartigen Zugriffen keine Fehler auftreten, müssen die Adressdaten im Bedien- und Beobachtungssystem und in der dazugehörigen Steuerung konsistent zueinander sein, d.h. es muss sichergestellt sein, dass mit einer Variablenadresse in beiden Systemen die gleiche logische Größe, insbesondere der gleiche Prozesswert, angesprochen wird. In der Praxis unterliegt aber eine technische Anlage laufenden Veränderungen. Diese können z.B. durch Umbauten, Erweiterungen bzw. Reparaturen hervorgerufen werden. Diese ziehen aber in der Regel auch Anpassungen im zugehörigen Automatisierungssystem nach sich, indem ein Anwender entsprechende Erweiterungen bzw. Korrekturen in der programmtechnischen Projektierung vornehmen muss, z.B. Hinzufügungen von weiteren Variablen oder Änderungen der Adressdaten von Variablen. Derartige Änderungen müssen aber in allen, zu einem Automatisierungssystem gehörigen programmgesteuerten Teilgeräten berücksichtigt werden. Bei einer Änderung des Programms z.B. in einer speicherprogrammierbaren Steuerung muss folglich auch der Datensatz z.B. in einem dazugehörigen Bedien- und Beobachtungssystem aktualisiert werden.

Hierzu stehen in der Phase der Projektierung eines Automatisierungssystems Mittel zur Konsistenzprüfung zur Verfügung. Damit kann ein Anwender prüfen, ob die in der speicherprogrammierbaren Steuerung vergebenen Variablenadressen zur Projektierung im dazugehörigen Bedien- und Beobachtungssystem korrespondieren. Wird dagegen eine derartige Konsistenzprüfung während der Engineering- und Projektierungsphase nicht durchgeführt, so können im laufenden Betrieb des Automatisierungssystems unerkannte Fehlzugriffe nicht mit Sicherheit ausgeschlossen werden. Im ungünstigsten Fall kann also in der speicherprogrammierbaren Steuerung unter einer dem Bedien- und Beobachtungssystem bekannten Adresse einer Variablen eine andere Variable liegen.

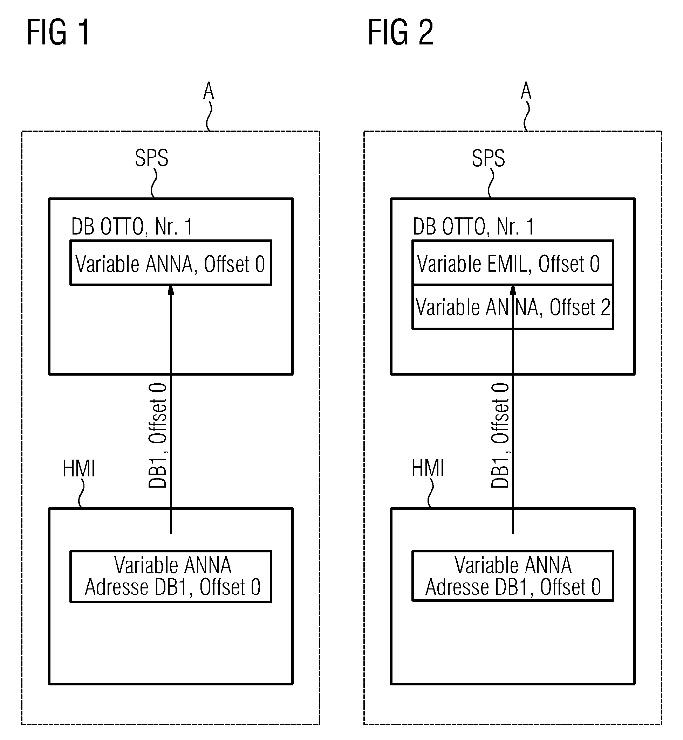

Das der Erfindung zu Grunde liegende Problem wird nachfolgend an Hand der Figuren 1 und 2 an einem beispielhaften verteilten Automatisierungssystem A erläutert. Dieses besteht exemplarisch aus zwei programmgesteuerten Teilgeräten, die datentechnisch über einen Bus, insbesondere einen Feldbus, gekoppelt sind. Als Teilgeräte sind beispielhaft eine speicherprogrammierbare Steuerung SPS und ein dazugehöriges Bedien- und Beobachtungssystem HMI eingesetzt. Diese Geräte werden nachfolgend abgekürzt mit "SPS" bzw. "HMI" bezeichnet. Das Problem kann auch bei anderen Kombinationen von programmgesteuerten Teilgeräten auftreten, welche datentechnisch gekoppelt sind und auf einheitliche Projektierungsdaten zur gemeinsamen Führung eines zugeordneten technischen Prozesses zugreifen. Weiterhin wird das Problem aus Gründen des besseren Verständnisses am Beispiel eines Automatisierungssystems erläutert, dessen Prozessdaten in Form von Datenbausteinen organisiert sind, bzw. zumindest solche aufweisen. Das Problem kann aber unabhängig von der Existenz von Datenbausteinen auch dann auftreten, wenn eine Variable absolut oder relativ zu einer Moduladresse adressiert wird.

So ist gemäß Fig. 1 in der SPS ein beispielhafter Datenbaustein mit dem Namen OTTO und der Nummer DB1 definiert. In diesem Datenbaustein DB1 ist wiederum eine Variable mit dem Namen ANNA und dem Datentyp WORD definiert. In der Praxis weisen die Projektierungsdaten zur Führung eines technischen Prozesses natürlich eine Vielzahl solcher Datenbausteine auf, welche in einer anlagenspezifischen Weise miteinander programmtechnisch verschaltet sind. Im Beispiel der Fig. 1 ist angenommen, dass die Variable ANNA am Anfang des Datenbausteins DB1 verzeichnet ist und somit relativ zu dessen Anfangsadresse einen Adressversatz, d.h. Offset, mit dem Wert "0" Byte aufweist. Im laufenden Betrieb des Automatisierungssystems greift das HMI auf diese Variable ANNA zu, z.B. zum Zwecke einer Anzeige des aktuellen Wertes in einem Prozessdiagramm auf einem Bildschirm. Dem HMI sind als Adressdaten der Variablenname ANNA, die Zuordnung zum Datenbaustein DB1 und der Offset mit dem Wert 0 bekannt. Da im Beispiel der Fig. 1 die Adressdaten der Variablen ANNA in der SPS und dem HMI konsistent sind, führt dieser Zugriff der HMI an die richtige Speicheradresse in SPS, und der gewünschte Wert kann fehlerfrei von der HMI gelesen werden.

Im Beispiel wird weiter angenommen, dass der Datenbaustein DB1 von einem Anwender erweitert wird. Eine solche Erweiterung ist beispielhaft in Fig. 2 gezeigt. Hierzu wird z.B. in den Datenbaustein DB1 eine weitere Variable mit dem Namen EMIL und dem Datentyp WORD vor der Variablen mit dem Namen ANNA eingefügt. Relativ zur Anfangsadresse des Datenbausteins DB1 weist nun die Variable EMIL einen Offset mit dem Wert "0" Byte auf. Da im Beispiel der Datentyp WORD eine Breite von 16 Bit aufweist, verschiebt sich dagegen der Offset der Variablen ANNA nun um 2 Byte nach hinten. Wird diese Adressänderung in der SPS nicht in der HMI entsprechend aktualisiert, dann greift die HMI noch immer mit einem Offset vom Wert "0" zu und liest anstelle der Variablen ANNA die Variable EMIL. Ein solcher, für einen Anwender unbemerkter Fehlzugriff kann zu Fehlanzeigen bei der HMI, und im ungünstigsten Falle auch zu Problemen bei der Bedienung des technischen Prozesses durch das HMI führen.

Der Erfindung liegt die Aufgabe zu Grunde ein Verfahren anzugeben, womit bei einem verteilten Automatisierungssystem auch im laufenden Betrieb festgestellt werden kann, ob zueinander inkonsistente Variablenprojektierungen in den einzelnen programmgesteuerten Teilgeräten vorliegen.

Die Aufgabe der Erfindung wird durch das in Anspruch 1 angegebene Verfahren gelöst. Vorteilhafte weitere Ausführungen der Erfindung sind in den Unteransprüchen angegeben.

Gemäß der Erfindung wird den Adressdaten einer Variablen bei einer Projektierung vom Automatisierungssystem ein eindeutiger Kennwert automatisch zugeordnet. Dieser macht die Adressierung unabhängig von OFFSET Werten, welche z.B. durch anwenderspezifische Clusterungen von Speicherzellen, Gruppierungen von Werten zu Datenbausteinen oder anderen programmtechnischen Maßnahmen hervorgerufen werden können. Der eindeutige Kennwert wird vom Automatisierungssystem nur einmal vergeben und bleibt für die Dauer der Existenz der dazugehörigen Variablen unverändert. Vorteilhaft kann es sich dabei um eine Integerzahl handeln. Die Erfindung bietet den Vorteil, dass eine Konsistenzprüfung derart erweiterter Adressdaten von Variablen in den programmgesteuerten Teilgeräten eines verteilten Automatisierungssystems nun auch im laufenden Betrieb sicher möglich ist. Diese erfindungsgemäße Erweiterung der Adressdaten hat den weiteren Vorteil, dass auch im Falle einer Hinzufügung von Variablen Fehladressierungen vermieden werden. Dies hat seine Ursache im Wesentlichen darin, dass sich gemäß der Erfindung die Kennwerte von bereits vorhandenen Variablen nicht ändern. Ein zweites Teilgerät kann also auf die Variablen in einem ersten Teilgerät eines verteilten Automatisierungssystems fehlerfrei zugreifen, solange sich der Zugriff auf Variablen beschränkt, welche bereits in der Vergangenheit projektiert und z.B. im Rahmen einer Konsistenzprüfung als fehlerfrei erkannt wurden. Das zweite Teilgerät ist also invariant gegenüber möglichen Änderungen im ersten Teilgerät.

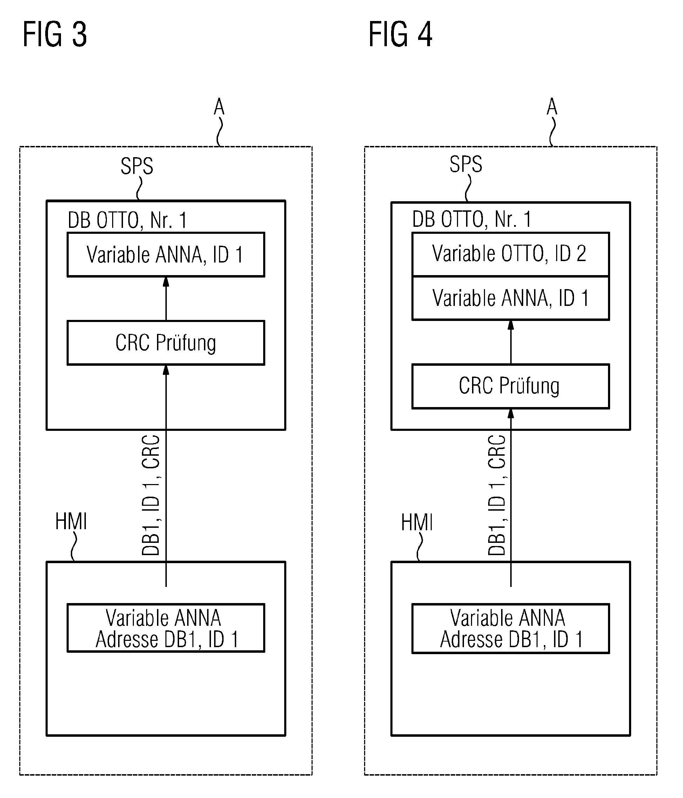

Die gemäß der Erfindung vorgeschlagene Lösung wird nachfolgend in den Figuren 3 und 4 an einem beispielhaften verteilten Automatisierungssystem A erläutert. Auch dabei wird die Erfindung an Hand eines Automatisierungssystems beschrieben, bei dem Variablen zu so genannten Datenbausteinen zusammengefasst sind, womit aus zumindest einem technologischen Eingangswert zumindest ein technologischer Ausgangswert erzielt wird. Dennoch ist die Erfindung nicht auf ein Automatisierungssystem beschränkt, welches programmtechnisch in Form von Datenbausteinen organisiert ist bzw. zumindest solche aufweist.

Das in den Figuren 3 und 4 beispielhaft dargestellte Automatisierungssystem A besteht wiederum aus zwei programmgesteuerten Teilgeräten, die datentechnisch über einen Bus, besonders einen Feldbus, gekoppelt sind. Als Teilgeräte sind z.B. eine speicherprogrammierbare Steuerung SPS und ein dazugehöriges Bedien- und Beobachtungssystem HMI eingesetzt, nachfolgend abgekürzt mit "SPS" bzw. "HMI" bezeichnet. Die Erfindung kann natürlich uneingeschränkt auch auf andere Kombinationen von programmgesteuerten Teilgeräten angewendet werden, welche datentechnisch gekoppelt sind und auf einheitliche Projektierungsdaten zur gemeinsamen Führung eines zugeordneten technischen Prozesses zugreifen müssen. So kann die Erfindung bei mehreren, zusammen arbeitenden Bedien- und Beobachtungsgeräten, bei der Kombination eines übergeordneten Leitsystems mit unterlagerten Steuerungsmodulen u.v.m. eingesetzt werden. So zeigen
- Fig. 1: ein oben bereits erläutertes Automatisierungssystem, welches einen beispielhaften Datenbaustein in einer speicherprogrammierbaren Steuerung SPS mit einer Variablen aufweist, auf die von einem Bedien- und Beobachtungssystem HMI ein Lesezugriff auf den aktuellen Inhalt der Variablen im Datenbaustein ausgeübt wird,
- Fig. 2: ein oben ebenfalls bereits erläutertes und mit Fig. 1 vergleichbares Automatisierungssystem, bei dem der Datenbaustein in der speicherprogrammierbaren Steuerung SPS um eine zusätzliche Variable erweitert wurde, und bei einem Lesezugriff von einem Bedien- und Beobachtungssystem HMI auf die ursprüngliche Variable ein Fehlzugriff auftritt,
- Fig. 3: ein Automatisierungssystem, bei dem nach dem erfindungsgemäßen Verfahren von einem Bedien- und Beobachtungssystem HMI ein Datenzugriff auf eine Variable in einer zugeordneten speicherprogrammierbaren Steuerung SPS ausgeübt wird, und
- Fig. 4: ein mit Fig. 3 vergleichbares Automatisierungssystem, bei dem der Datenbaustein in der speicherprogrammierbaren Steuerung SPS ebenfalls um eine zusätzliche Variable erweitert wurde, und bei einem Lesezugriff von einem Bedien- und Beobachtungssystem HMI auf die ursprüngliche Variable auf Grund des erfindungsgemäßen Adressierungsverfahrens kein Fehlzugriff auftritt.

In den Figuren 3, 4 ist ein beispielhaftes, zu den Figuren 1, 2 vergleichbares verteiltes Automatisierungssystem A gezeigt. In der SPS in Fig. 3 ist wiederum ein Datenbaustein DB1 mit Namen OTTO und Nummer 1 definiert. Darin ist wiederum eine Variable mit Namen ANNA und Datentyp WORD definiert. Erfindungsgemäß ist der Variablen ANNA eine eindeutige Kennung zugewiesen, im Beispiel ID 1. Hierdurch wird die Variable ANNA adresstechnisch unabhängig vom jeweiligen Adressversatz im Inneren des Datenbausteins. Es spielt also für die Adressierung z.B. im Rahmen einer Projektierung keine Rolle mehr, ob die Variable ANNA ganz am Anfang des Datenbausteins DB1 oder an einer anderen Stelle verzeichnet ist. Die notwendige Zuordnung zwischen der eindeutigen Kennung zu dem tatsächlich vorhandenen Offset relativ zur Anfangsadresse des Datenbausteins DB1 wird erfindungsgemäß vom Automatisierungssystem intern selbstständig verwaltet, z.B. mit Hilfe von Verweistabellen. Stattdessen kann z.B. ein Projekteur quasi ohne Rücksicht auf die systeminterne Aktualisierung der Offsetwerte der Variablen bei deren Adressierung mit zugeordneten, eindeutigen Kennwerten arbeiten. So wird im Beispiel der Fig. 3 die Variable OTTO im Datenbaustein DB1 der SPS nun vom HMI erfindungsgemäß mit den Adressdaten DB1 + ID1 angesprochen, statt mit DB1 + OFFSET wie in Fig. 1.

Weiterhin ist vergleichbar zu Fig. 2 der Datenbaustein DB1 in Fig. 4 ebenfalls um eine Variable EMIL erweitert, welche wiederum vor der bereits vorhandenen Variablen ANNA eingefügt ist. Erfindungsgemäß ist auch die Variable EMIL nun mit einem eindeutigen Kennwert ID 2 ausgestattet, und somit über die Adressdaten DB1 + ID2 ansprechbar. Bei dem in Figur 4 dargestellten Beispiel wird nach wie vor die Variable ANNA adressiert, da diese die feste ID 1 aufweist, während der Variablen EMIL die unterscheidbare ID 2 zugeordnet wurde. Trotz der Einfügung der Variablen EMIL und damit verbundener Offset Veränderungen wird das HMI also fehlerfrei unter der ID 1 die gesuchte Variable ANNA finden.

Vorteilhaft werden zur Adressierung von Variablen ineinander geschachtelte Strukturen von Namensbestandteilen verwendet. In üblichen Programmiersprachen wird zumeist ein Punkt als Trennzeichen zwischen den Namensbestandteilen verwendet, z.B. "Förderband.Motor[1].Drehzahl.Istwert". In einem solchen Fall ist es vorteilhaft, wenn jedem Namensbestandteil ein eigener Kennwert ID zugewiesen wird. Auf diese Weise gebildete Adressdaten bestehen dann aus einer Kette von Kennwerten in Form von Integerzahlen.

Die erfindungsgemäße Adresserweiterung ist sogar robust gegenüber grundlegenden Anpassungen. Wird von einem Anwender z.B. der Datentyp einer Variablen geändert, dann existiert die alte Variable im Grunde nicht mehr und es ist quasi eine neue Variable entstanden. Auch in diesem Fall wird erfindungsgemäß der quasi neuen Variablen mit dem geänderten Datentyp ein neuer Kennwert zugeordnet, und der Kennwert, welcher der "alten" Variablen vor dieser Änderung zugeordnet war, archiviert. Auf diese Weise ist sichergestellt, dass die Menge der im System vergebenen Kennwerte eindeutig bleibt, also kein Kennwert zu keinem Zeitpunkt mehr als einer Variablen zugeordnet war. Wird eine solche Änderung der Datenbasis der SPS versehentlich nicht auch in das HMI geladen, so würde das HMI bei einem Lesezugriff auf die alte Variable quasi ins Leere greifen, da die "alte" ID nicht mehr vorhanden ist. Das Automatisierungssystem kann dies dem Anwender durch eine entsprechende Fehlermeldung signalisieren. Dies hat den Vorteil, dass unbemerkte Fehlzugriffe und damit verdeckte fehlerhafte Systemzustände des Automatisierungssystems vermeiden werden. Stattdessen bekommt ein Anwender auf diese Weise einen eindeutigen Hinweis auf die Notwendigkeit der Durchführung einer Fehleranalyse.

Fehlzugriffe dieser Art können auch auftreten, wenn ein Anwender die technologische Bedeutung einer Variablen ändert, z.B. einen Sollwert in einen Istwert oder einen Füllstand in einen Durchfluss ändert. Eine solche Änderung macht in der Regel auch eine Anpassung des Namens der Variablen notwendig. Auch solche Namensänderungen müssen in allen Teilsystemen eines Automatisierungssystems aktualisiert werden.

Gemäß einer besonders vorteilhaften weiteren Ausführung der Erfindung können Fehlzugriff in einem solchen Falle dadurch abgefangen werden, dass die Adressdaten einer Variablen um einen zusätzlichen Prüfwert erweitert werden, welcher über die gesamten Adressdaten der Variablen gebildet wird, z.B. den Variablennamen und den vollständigen Namenspfad. Als Prüfwert kann vorteilhaft eine durch einen "Cyclic Redundancy Check" CRC über den gesamten Namenspfad der Variablen gewonnene Größe verwendet werden. Bei einer Datenabfrage übermittelt das abfragende zweite Teilgerät des Automatisierungssystems, in den Beispielen der Figuren 3 und 4 das HMI, diesen CRC zusätzlich zum Variablennamen, zur Datenbausteinkennung und zum eindeutigen Kennwert der gesuchten Variablen an das abgefragte erste Teilgerät, im Beispiel die SPS.

Wie in Fig. 4 bereits dargestellt, führt die SPS nun eine "CRC Prüfung" durch. Hierzu ermittelt die SPS den zur angefragten Variablen gehörigen CRC Wert selbständig unter Zugrundelegung der eigenen Projektierungsdaten. Liegen keine Fehler in den Adressierungsdaten der Variablen vor, so stimmt dieser selbst ermittelte CRC Wert mit dem vom HMI übergebenen CRC Wert überein. Die Variable kann dann wie angefordert freigegeben werden, d.h. insbesondere deren aktueller Wert an das HMI übergeben werden. Andernfalls kann das Automatisierungssystem dies dem Anwender durch eine entsprechende Fehlermeldung signalisieren. Dies hat wie oben den Vorteil, dass unbemerkte Fehlzugriffe und damit verdeckte fehlerhafte Systemzustände des Automatisierungssystems vermeiden werden. Stattdessen bekommt ein Anwender wiederum einen eindeutigen Hinweis auf die Notwendigkeit der Durchführung einer gesonderten Fehleranalyse.

Zusammengefasst bietet die Erfindung den Vorteil, dass die Entkopplung der Projektierung von programmgesteuerten Teilgeräten eines verteilten Automatisierungssystems verbessert wird. Besonders vorteilhaft wird durch die Erfindung die bisher definierte Projektierung in einem zweiten Teilgerät, z.B. einem HMI, durch Erweiterungen der Variabeln in einem ersten Teilgerät, z.B. einer SPS, nicht tangiert. Alle bisher vorhandenen Variablen behalten ihren statischen Kennwert und können unverändert von dem ebenfalls bereits dazu projektierten zweiten Teilgerät, z.B. einem HMI, angesprochen werden, ohne das quasi ein Update des zweiten Teilgeräts erforderlich wäre. Sollte dennoch eine Änderung im ersten Teilgerät dazu führen, dass Inkompatibilitäten der Adressdaten bzgl. eines angeschlossenen zweiten Teilgeräts verbleiben, so wird dies beim Zugriff im laufenden Betrieb erkannt und verursacht keine unbemerkten Fehlzugriffe mehr.

## Patentansprüche

1. Verfahren zur Adressierung einer Variablen in einem verteilten Automatisierungssystems (A) mit zumindest einem ersten und zweiten programmgesteuerten Teilgerät (SPS, HMI), wobei für eine Adressierung der Variablen (ANNA) durch das zweite Teilgerät (HMI) als Adressdaten an das erste Teilgerät (SPS) übermittelt werden
- zumindest ein der Variablen (ANNA) zugeordneter eindeutiger Kennwert (ID1), der bei einer Definition der Variablen (ANNA) vom ersten Teilgerät (SPS) selbstständig so generiert wurde, dass dieser im ersten Teilgerät (SPS) zu keinem Zeitpunkt einer weiteren Variablen (EMIL) zugeordnet ist, und
- einen Prüfwert (CRC) über die Adressdaten der Variablen (ANNA).

2. Verfahren zur Adressierung nach Anspruch 1, wobei
- das erste Teilgerät (SPS) einen Prüfwert für die Adressdaten der Variablen (ANNA) selbst bestimmt und diesen mit dem vom zweiten Teilgerät (HMI) übermittelten Prüfwert vergleicht, und
- ein Istwert der gewünschten Variablen (ANNA) vom ersten Teilgerät (SPS) nur bei Übereinstimmung des selbst bestimmten mit dem übermittelten Prüfwert (CRC) freigegeben wird.

3. Verfahren zur Adressierung nach Anspruch 1 oder 2, wobei eine Fehlermeldung generiert wird, wenn im ersten Teilsystem (SPS) keine Übereinstimmung des selbst bestimmten mit dem vom zweiten Teilsystem (HMI) übermittelten Prüfwert (CRC) einer gewünschten Variablen gestellt wird.

4. Verfahren zur Adressierung nach einem der vorangegangenen Ansprüche, mit einer Integerzahl als eindeutiger Kennwert (ID1) der Variablen (ANNA).

5. Verfahren zur Adressierung nach einem der vorangegangenen Ansprüche, wobei eine Fehlermeldung generiert wird, wenn im ersten Teilsystem (SPS) bei der Adressierung einer Variablen durch das zweite Teilsystem (HMI) keine Variable mit einem den Adressdaten entsprechenden Kennwert gefunden wird.

6. Verfahren zur Adressierung nach einem der vorangegangenen Ansprüche, wobei
- die Variable (ANNA) Bestandteil eines Datenbausteins (DB1) zumindest im ersten Teilgerät (SPS) des verteilten Automatisierungssystems (A) ist, und
- vom zweiten Teilgerät (HMI) in den Adressdaten an das erste Teilgerät (SPS) zusätzlich eine Kennung des Datenbausteins (DB1), in dem die Variable (ANNA) verzeichnet ist, übermittelt wird.

7. Verfahren zur Adressierung nach Anspruch 6, mit einer oder mehreren Integerzahlen als Kennung des Datenbausteins (DB1) und der Namensbestandteile die zur Variablen (ANNA) führen.
